# EUROPEAN PATENT SPECIFICATION

(11) **EP 1 927 531 B1**
(45) Date of publication and mention of the grant of the patent: **30.12.2009**
(21) Application number: 06125279.7
(22) Date of filing: 01.12.2006
(51) Int. Cl.: B62D 21/15, B62D 25/08

(54) **An automotive bumper and lower frame rail**
Fahrzeugstossfänger und untere Längsträger
Pare-choc et poutre basse de véhicule automobile

(43) Date of publication of application: 04.06.2008
(73) Proprietor: Ford Global Technologies, LLC, Dearborn, MI 48126 (US); Vari-Form, Inc., Warren MI 48089-2614 (US)
(72) Inventor: Caliskan, Ari, Canton, MI 48187 (US); Gericke, Dean, Brighton, MI 48116 (US)
(74) Representative: Messulam, Alec Moses

(56) References cited:
- US-B1- 6 193 274

## Description

This invention relates to a bumper for an automotive vehicle and, more particularly, to a rear bumper and lower frame rail formed from a single hydroformed component for attachment to the lower frame mid-rails.

Bumpers are mounted at the forward and rearward extremities of a motor vehicle to protect the chassis of the vehicle from minor impacts. The bumper is mounted to the lower frame rails of the vehicle chassis for support thereof and functions to withstand minor impacts by collapsing to absorb the energy encountered through the impact.

The structure of a bumper can be formed in a "B-shaped" configuration with a front face flange and upper and lower cells. This B-shaped structural configuration can be seen in U. S. Patent No. 6,510,771, issued to Peter Sturrus, et al on January 28, 2003. The Sturrus patent discloses a bumper having a transversely extending member shaped in the "B" configuration with the bumper having upper and lower tubular portions with an intermediate portion between the two tubular cells. Bumpers can be formed through a number of processes, including roll-forming; stamping, such as is depicted in U. S. Patent No. 6,193,274, issued to Richard Brown, et al on February 27, 2001, in which the bumper support and front rail portion is formed by a central tubing and side tubular members; and extruding, such as is depicted in U. S. Patent No. 5,727,826, issued to Simon Frank, et al on March 17, 1998, wherein the bumper is formed by two longitudinally spaced wall sections or by integrally forming longitudinal and vertically spaced struts.

The frame apparatus disclosed in U. S. Patent No. 5,882,039, issued to John Beckman, et al on March 16, 1999, is formed through hydroforming and incorporates a cross member extending across the U-shaped frame member to form an engine cradle. U. S. Patent No. 6,010,155, issued to Ronald Rinehart on January 4, 2000, discloses the connection of longitudinally spaced tubing members via the insertion of one rounded portion of a member into the slotted and split rounded portion of the other tubing member. U. S. Patent No. 5,839,776, issued to Edvin Clausen on November 24, 1998, discloses vertically spaced tubes between frame rails and the bumper.

U. S. Patent No. 3,557,894, issued to Donald Hanley on January 26, 1971, and U. S. Patent No. 3,799,283, issued to Elmer Freber on March 26, 1974, teach the forming a go-cart framing through tubes that form a bumper and a substantial portion of the go-cart's frame structure. Such bumper and frame structure is not particularly well suited to modern automotive manufacture.

It would be desirable to provide a bumper and lower frame rail structure that are particularly adaptable to manufacturing through hydroforming processes and which can be utilized in the manufacture of an automobile while providing adequate crash performance characteristics.

It is an object of this invention to overcome the aforementioned disadvantages of the known prior art by providing a single component bumper and lower frame rail construction that can be attached to and supported from the lower frame mid-rails. It is a further object of this invention to provide a bumper and lower frame rail structure that is durable in construction, inexpensive to manufacture, simple to assemble and effective in use.

According to a first aspect of the invention there is provided a bumper assembly for an automotive vehicle, comprising: a pair of tubular members affixed to one another in a vertical orientation to place a sidewall of each said tubular member adjacent one another and define a generally horizontally oriented internal web member formed from said adjacent sidewalls, said tubular members being welded along a seam between said tubular members, each said tubular member being formed with a transverse portion and a pair of longitudinally extending mounting legs, each said mounting leg being formed with a reduced-size terminal end to permit insertion into a lower frame midrail having substantially identical external dimensions as said mounting legs, said lower frame midrail being formed with a generally vertical internal web, said reduced-size terminal end of said mounting legs having a slot formed therein to permit the receipt of said vertical internal web when said reduced-size terminal end is inserted into said lower frame midrail.

The pair of longitudinally extending mounting legs may have a substantially identical geometrical configuration as the transverse beam portion.

The tubular members may be formed through a hydroforming process with crash triggers formed in the tubular members.

Each horizontally oriented wall of the reduced-size terminal end is formed with the slot.

The bumper may be a rear bumper of the motor vehicle.

According to a second aspect of the invention there is provided an automobile having a structural frame in which a bumper is supported by lower frame mid-rails characterised in that the bumper comprises a bumper in accordance with said first aspect of the invention.

The bumper may include a transverse portion and integral longitudinally extending mounting legs, each of the mounting legs having a terminal end and the bumper may be formed from upper and lower tubular members having a generally horizontal internal web dividing the bumper into upper and lower cells and the lower frame mid-rails may be formed as a pair of tubular member such that each terminal end is received internally of a corresponding lower frame mid-rail to mount the bumper to the lower frame mid-rails.

The lower frame mid-rails may be formed with a generally vertical internal web, each terminal end having formed therein one or more slots to permit receipt of the generally vertical internal web of the frame mid-rails into the terminal end.

There may be a slot is formed in a top wall of the upper tubular member of the bumper, in a bottom wall of the lower tubular member of the bumper and a slot formed in the generally horizontal internal web of the bumper formed by a top wall of the bottom tubular member of the bumper and a bottom wall of the top tubular member of the bumper.

The bumper may have a substantially identical exterior geometry as the lower frame mid-rails, each terminal end being formed in a reduced-size configuration to permit the insertion of the terminal ends into the lower frame mid-rails.

Preferably, the tubular members may be welded along a seam corresponding to the horizontally oriented internal web between the tubular members.

The tubular members of the bumper may be formed by a hydroforming process with crash triggers formed in the tubular members.

The lower frame mid-rails may be formed by a hydroforming process.

The lower frame mid-rails may be oriented to form a longitudinally extending portion with the tubular members forming the lower frame mid-rails being positioned laterally of one another.

It is an advantage of this invention that the cross-sectional configuration of the bumper beam can be uniformly manufactured along the entire length of the bumper beam and extend through the lower frame rails.

It is still another advantage of this invention that the bumper assembly and the lower frame rails can be formed into a single structural component having a generally uniform cross-sectional configuration throughout.

It is still another feature of this invention that the bumper beam can be formed with crash triggers to direct the deformation of the bumper assembly and lower frame rail in a manner to enhance crash performance.

It is a further advantage of this invention that the manufacturing cost of a bumper and lower frame rail can be lowered without sacrificing crash performance characteristics.

The invention will now be described by way of example with reference to the accompanying drawing of which:-
Fig.1 is a top plan view of the single component bumper and lower frame rail structure attached to the frame mid-rails to form the rear frame structure for an automobile incorporating the principles of the instant invention;
Fig.2 is a side elevational view of the bumper and lower frame rail structure depicted in Fig. 1;
Fig.3 is an enlarged partial perspective view of the bumper structure incorporating the principles of the instant invention;
Fig.4 is an enlarged perspective detail view of the reduced terminal end portion of the longitudinally extending mounting legs of the bumper structure to be inserted into the lower frame rails, as is depicted in Figs. 1 and 2;
Fig.5 is a top plan view of the reduced terminal end portion of the mounting leg structure being inserted into the dual tube lower frame mid-rails as depicted in Figs. 1 and 2;
Fig.6 is a bottom perspective view of the bumper and lower frame rail structure shown in Fig. 1; and
Fig.7 is an enlarged bottom perspective view of the divergent zone of the lower frame mid-rail assembly showing the connection of the cross frame members and the shock tower support member.

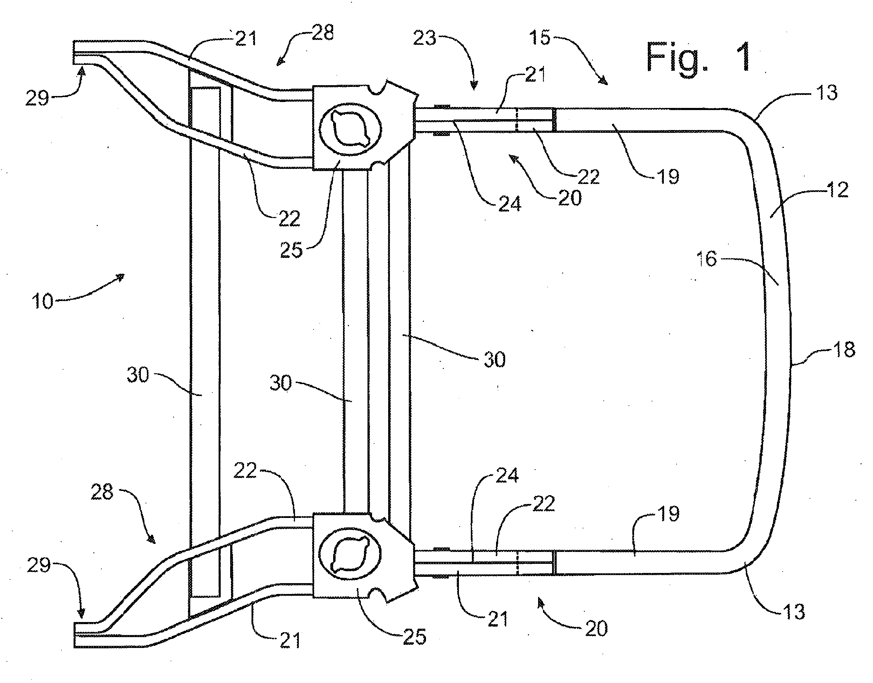

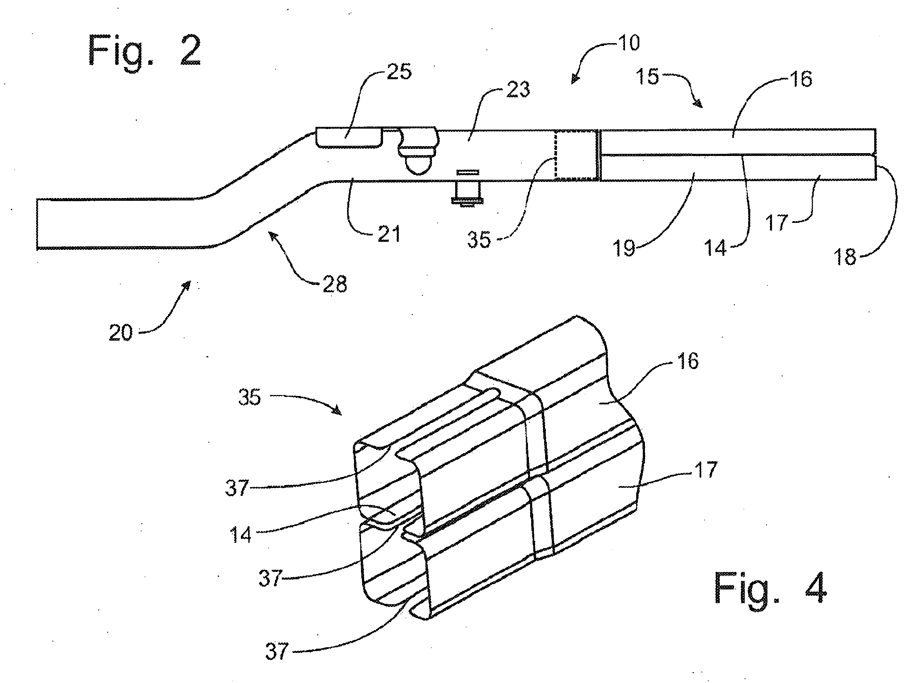

Referring to Figs.1 and 2, a bumper and lower frame rail, including the mid-rails having a shock tower support mounted thereon, forming the rear end of an automobile frame and incorporating the principles of the instant invention, can best be seen. The frame 10 of the automobile is preferably formed from hydroformed tubular members. Such tubular members can be spot-welded and/or MIG-welded to form an integral frame assembly for the rear end of a vehicle.

Hydroforming is a process by which a standard tubular stock member is placed into a form shaped to correspond to the particular member to be formed and to correspond to the particular section required for the frame design. A liquid is then introduced into the interior of the tubular stock and pressurized until the tubular stock expands to assume the shape defined by the configured form. The expanded and re-shaped tubular stock now has a substantially different shape. By forming cutouts and other access openings into the re-shaped tubular member, spot-welding electrodes can gain access to opposing adjacent sides to create a weld bond between juxtaposed members. In this manner, a frame, as an example, for an automobile can be created using in large part hydroformed tubular members. One skilled in the art will readily recognize that some MIG-welding will be required in areas where access holes are detrimental to the integrity of the frame structure. Preferably, such MIG-welding processes are performed at a sub-assembly or at a supplier level.

In the automotive rear end frame 10 depicted in the drawings, the bumper 15 is formed from welded hydroformed members. Similarly, the lower frame mid-rails 20 which connect to the bumper 15 and project forwardly therefrom are also formed from tubular hydroformed members. The shock tower support member 25 is preferably a stamping that is formed into a specific shape and mounted on the lower frame mid-rails 20, as is described in greater detail below.

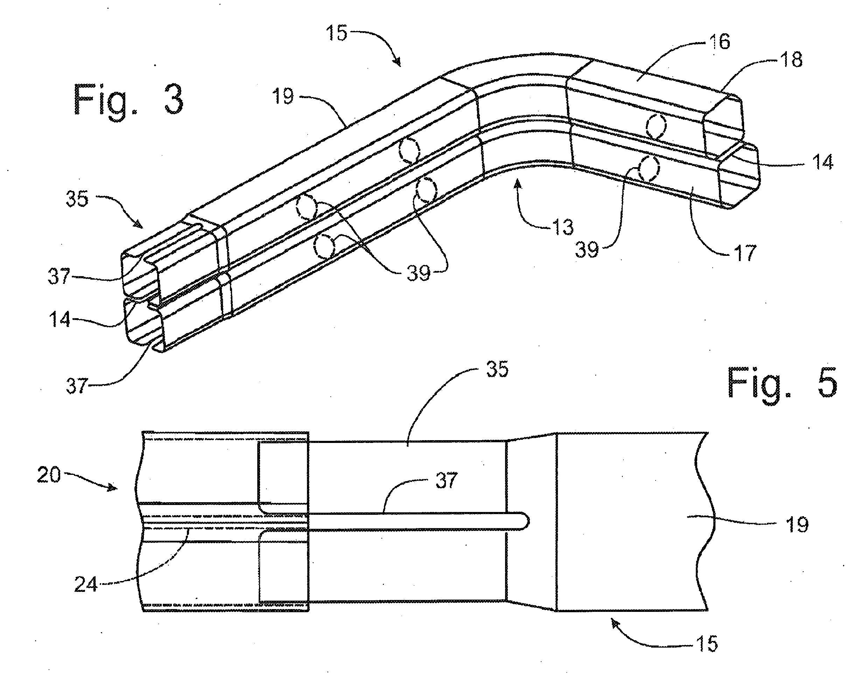

The lower frame mid-rail 20 is formed from two hydroformed tubular members 21, 22 that have corresponding first longitudinally extending portions 23 that are welded together at the rearwardmost end of the members 21, 22 preferably by MIG-welding along the generally horizontal seam between the members 21, 22. As is best seen in Figs. 1 and 5, the lower frame mid-rail structure 20 would then have an internal vertical web 24 formed from the adjacent sidewalls of the two tubular members 21, 22, oriented as an exterior member 21 and an interior member 22. The internal web 24 substantially increases the strength and stiffness of the lower frame mid-rail 20, compared to a conventional tubular member.

The longitudinally extending portions 23 are positioned for connection to the bumper 15, as will be described in greater detail below. Forwardly of the longitudinally extending portions 23, the two tubular members 21, 22 diverge to define a divergent portion 28 to provide a lateral spacing between the two members 21, 22. At this point of divergence, the shock tower support 25 is affixed, preferably by welding, to the top of the two tubular members 21, 22. The tubular members 21, 22 converge into a second longitudinally extending portion 29 forward of the divergent portion 28.

Unlike conventional shock tower supports, the shock tower support member 25 is adequately supported both inboard and outboard on the laterally spaced members 21, 22 in the divergent zone 28 to provide a stable foundation for the shock tower (not shown). The shock tower support stamping 25 transfers road loads directly to the frame 10 and also provides sectional stability for any rear impact loads that might be encountered. This design results in a stiffer, stronger, yet lighter joint than is known in the prior art.

To facilitate the use of spot welding techniques, the tubular members 21, 22 can be formed with appropriate access openings 26 in the sidewalls for passage of a welding electrode. Similarly, cross frame members 30 can be welded between the opposing sides of the lower frame rails 20 to span the lateral distance across the vehicle frame 10. The cross frame members 30 can be inserted into appropriate openings 27 in the sidewalls of the tubular members 21, 22 to permit the passage of the cross frame members 30 internally into the interior tubular member 22 to enable the cross frame members 30 to be welded directly to the interior tubular member 22.

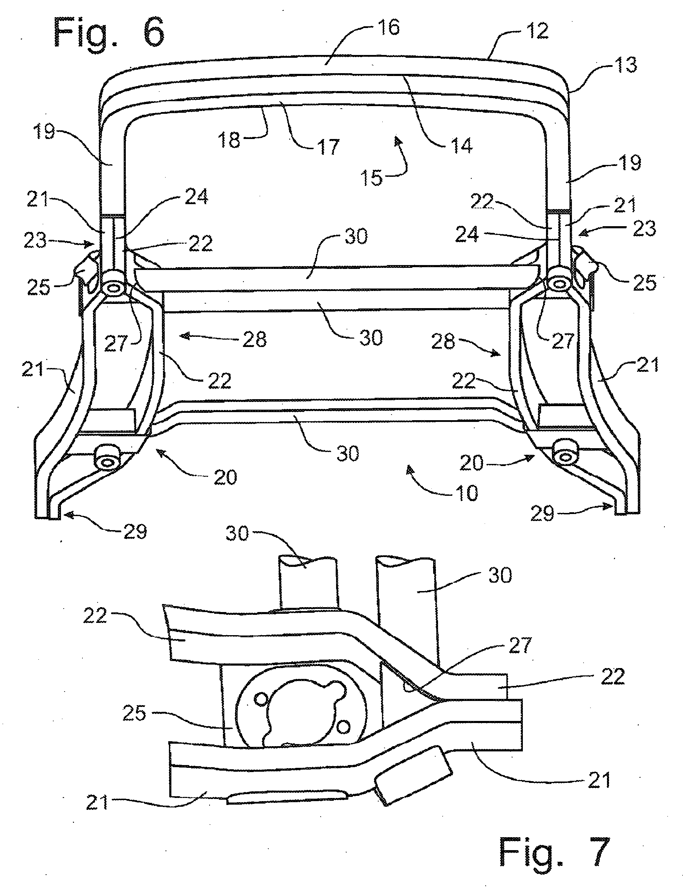

Preferably, as is best seen in Fig.6, at least one of the cross frame members 30 adjacent the shock tower support 25 will pass through appropriate openings 27 in the interior tubular member 22 to engage the exterior tubular member 21 to permit welding between both members 21, 22 and the cross frame member 30. Such fabrication will add cross-vehicle stiffness to the frame 10, as well as provide a robust joint at the shock tower support 25. Preferably, the interior and exterior tubular members 21, 22 converge so that the lower frame mid-rail 20 will extend forwardly with a central vertical web 24, as is shown with respect to the rearward longitudinally extending portions 23.

The bumper 15 can also be constructed from two hydroformed members 16, 17, with the upper tubular member 16 being located on top of the lower tubular member 17. Preferably both tubular bumper members 16, 17 are shaped substantially identically with a rearwardly positioned bight portion 18 and opposing mounting legs 19, which eliminate the need for a separate lower frame rail spanning between a conventional lower frame mid-rail and the bumper. The two tubular members 16, 17 can be MIG-welded along the generally horizontally extending seam therebetween to form a dual-celled bumper 15. Formation of the tubular members through the hydroforming process permits the introduction of deformation triggers 39, i.e. fold points to direct the deformation of the bumper in a prescribed manner when encountering an impact load.

This bumper 15 not only has the transversely oriented bight portion 18 forming the laterally extending rear bumper beam 12, but the integrally formed longitudinally extending mounting legs 19, or lower frame rails, provide the function of mounting the bumper beam 12 to the lower frame mid-rails 20. A curved transition portion 13 preferably separates the transverse bight portion 18 from the longitudinal mounting legs 19. In a conventional bumper design, the bumper beam, lower frame rails and attachment brackets are separate parts that are assembled to form the bumper structure. The formation of the bumper 15 according to the principles of this invention substantially reduces the number of parts required. With the two tubular members 16, 17 being welded together in a vertical orientation, the resultant structure has a horizontally oriented internal web 14 that enhances strength and stiffness for the bumper structure 15.

One of ordinary skill in the art will readily realise that the bumper 15 could also be formed through a roll-forming process in which the upper and lower cells of the bumper beam 15 would be separated by a horizontally oriented internal web 14. While the formation of the tubular members 16, 17 through the hydroforming process enables the tubular members 16, 17 to have triggers 39 formed therein during the formation process, the crash triggers 39 would have to be formed in the bumper by a separate processing step if the bumper 15 were manufactured through the roll-forming process.

Referring particularly to Figs.3 to 5, the forward ends of the mounting legs 19 are formed to mate with the dual tube lower frame mid-rails 20. Each tubular member 16, 17 is formed with a reduced-sized terminal end 35 that can fit between the interior and exterior sidewalls of the lower frame mid-rails 20, whereas the remainder of the mounting legs 19 are formed to correspond geometrically with the longitudinally extending portions 23 of the lower frame rails 20. As a result, the insertion of the reduced-sized terminal end 35 into the rearward ends of the lower frame mid-rails 20 results in a generally uniformly shaped frame 10 with the overall width and depth of the bumper structure 15 being substantially equal to the overall width and depth of the lower frame mid-rails 20.

To accommodate the interference between the horizontal internal web 14 of the mounting legs 19 and the vertical internal web 24 of the longitudinally extending portions 23 of the lower frame mid-rails 20, the reduced-size terminal end 35 is formed with a slot 37 into the top and bottom walls of both of the upper and lower tubular members 16, 17. When the reduced-size ends 35 of the mounting legs 19 are inserted into the lower frame mid-rails 20, the vertical internal web 24 slides into the aligned slots 37.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as defined by the appended claims.

## Claims

1. A bumper assembly (15) for an automotive vehicle, comprising:
a pair of tubular members (16,17) affixed to one another in a vertical orientation to place a sidewall of each said tubular member adjacent one another and define a generally horizontally oriented internal web member (14) formed from said adjacent sidewalls,
said tubular members being welded along a seam between said tubular members, each said tubular member being formed with a transverse portion (18) and a pair of longitudinally extending mounting legs (19),
each said mounting leg being formed with a reduced-size terminal end (35) to permit insertion into a lower frame midrail (20) having substantially identical external dimensions as said mounting legs,
said lower frame midrail being formed with a generally vertical internal web, said reduced-size terminal end of said mounting legs having a slot formed therein to permit the receipt of said vertical internal web when said reduced-size terminal end is inserted into said lower frame midrail.

2. A bumper as claimed in Claim 1, wherein the tubular members (16, 17) are formed through a hydroforming process with crash triggers (39) formed in the tubular members (16, 17) .

3. An automobile having a structural frame in which a bumper is supported by lower frame mid-rails **characterised in that** the bumper comprises a bumper (15) as claimed in any of claims 1 and 2.

4. An automobile as claimed in claim 3, wherein the bumper (15) includes a transverse portion (18) and integral longitudinally extending mounting legs (19), each of the mounting legs (19) having a terminal end (35) and the bumper (15) is formed from upper and lower tubular members (16, 17) having a generally horizontal internal web (14) dividing the bumper into upper and lower cells and the lower frame mid-rails (20) are formed as a pair of tubular member (21, 22) such that each terminal end (35) is received internally of a corresponding lower frame mid-rail to mount the bumper (15) to the lower frame mid-rails (20).

5. An automobile as claimed in claim 4 wherein the lower frame mid-rails are formed with a generally vertical internal web (24), each terminal end (35) having formed therein at least one slot (37) to permit receipt of the generally vertical internal web (24) of the frame mid-rails (20) into the terminal end (35).

6. An automobile as claimed in claim 5, wherein the at least one slot (37) is formed in a top wall of the upper tubular member (16) of the bumper (15), in a bottom wall of the lower tubular member (17) of the bumper (15) and in the generally horizontal internal web (14) of the bumper (15) formed by a top wall of the bottom tubular member (17) of the bumper (15) and a bottom wall of the top tubular member (16) of the bumper (15).

## Patentansprüche

1. Stoßfänger (15) für ein Kraftfahrzeug, umfassend:
ein Paar rohrförmiger Elemente (16, 17), die senkrecht ausgerichtet aneinander befestigt sind, um eine Seitenwand eines jeden dieser rohrförmigen Elemente nebeneinander zu platzieren und ein im Allgemeinen waagrecht ausgerichtetes innenliegendes Stegelement (14) zu bilden, das von diesen nebeneinanderliegenden Seitenwänden gebildet wird,
wobei diese rohrförmigen Elemente entlang einer Naht zwischen diesen rohrförmigen Elementen geschweißt sind und jedes dieser rohrförmigen Elemente mit einem quer verlaufenden Abschnitt (18) und einem Paar sich längs erstreckender Befestigungsschenkel (19) gebildet ist,
wobei dieser Befestigungsschenkel mit einem Anschlussende (35) mit reduzierter Größe gebildet ist, um die Einführung in ein Mittelstück (20) des unteren Längsträgers zu ermöglichen, das im Wesentlichen identische Außenmaße wie diese Befestigungsschenkel hat,
wobei dieses Mittelstück des unteren Längsträgers mit einem im Allgemeinen senkrecht verlaufenden innenliegenden Steg gebildet ist und dieses Anschlussende mit reduzierter Größe dieser Befestigungsschenkel über einen darin gebildeten Schlitz verfügt, um die Aufnahme dieses senkrecht verlaufenden innenliegenden Stegs zu ermöglichen, wenn dieses Anschlussende mit reduzierter Größe in dieses Mittelstück des unteren Längsträgers eingeführt wird.

2. Stoßfänger gemäß Anspruch 1, wobei die rohrförmigen Elemente (16, 17) durch einen Hydroforming-Prozess geformt werden, wobei Crash-Auslöser (39) in den rohrförmigen Elementen (16, 17) geformt werden.

3. Automobil mit einem tragenden Rahmen, in dem ein Stoßfänger von Mittelstücken unterer Längsträger gehalten wird, **dadurch gekennzeichnet, dass** der Stoßfänger einen Stoßfänger (15) gemäß einem der Ansprüche 1 und 2 umfasst.

4. Automobil gemäß Anspruch 3, wobei der Stoßfänger (15) einen quer verlaufenden Abschnitt (18) und einstückig gebildete, sich längs erstreckende Befestigungsschenkel (19) enthält, wobei jeder der Befestigungsschenkel (19) über ein Anschlussende (35) verfügt und der Stoßfänger (15) aus einem oberen und einem unteren rohrförmigen Element (16, 17) gebildet wird und über einen im Allgemeinen waagrecht verlaufenden innenliegenden Steg (14) verfügt, der die Stoßfänger in obere und untere Zellen aufteilt, und die Mittelstücke (20) der unteren Längsträger als Paar rohrförmiger Elemente (21, 22) gebildet werden, sodass jedes Anschlussende (35) innen in einem entsprechenden Mittelstück des unteren Längsträgers aufgenommen wird, um den Stoßfänger (15) an den Mittelstücken (20) der unteren Längsträger zu befestigen.

5. Automobil gemäß Anspruch 4, wobei die Mittelstücke der unteren Längsträger mit einem im Allgemeinen senkrecht verlaufenden innenliegenden Steg (24) gebildet werden und in jedem Anschlussende (35) mindestens ein Schlitz (37) gebildet wird, um die Aufnahme des im Allgemeinen senkrecht verlaufenden innenliegenden Stegs (24) der Längsträger-Mittelstücke (20) in das Anschlussende (35) zu ermöglichen.

6. Automobil gemäß Anspruch 5, wobei der mindestens eine Schlitz (37) in einer oberen Wand des oberen rohrförmigen Elements (16) des Stoßfängers (15) gebildet wird, in einer unteren Wand des unteren rohrförmigen Elements (17) des Stoßfängers (15) und im im Allgemeinen waagrecht verlaufenden innenliegenden Steg (14) des Stoßfängers (15), der von einer oberen Wand des unteren rohrförmigen Elements (17) des Stoßfängers (15) und einer unteren Wand des oberen rohrförmigen Elements (16) des Stoßfängers (15) gebildet wird.

## Revendications

1. Ensemble pare-chocs (15) pour un véhicule automobile, comprenant :
une paire d'éléments tubulaires (16, 17) fixés l'un à l'autre suivant une orientation verticale afin de placer une paroi latérale de chacun desdits éléments tubulaires en position adjacente l'une à l'autre et de définir un élément de barre interne (14), généralement orienté dans le plan horizontal, formé à partir desdites parois latérales adjacentes,
lesdits éléments tubulaires étant soudés le long d'un cordon entre lesdits éléments tubulaires, chacun desdits éléments tubulaires étant constitué d'une partie transversale (18) et d'une paire de pattes de montage (19) s'étendant dans le plan longitudinal,
chacune desdites pattes de montage étant constituée d'une extrémité terminale (35) à taille réduite pour permettre son insertion dans une traverse intermédiaire (20) de bâti inférieur ayant des dimensions externes sensiblement identiques auxdites pattes de montage,
ladite traverse intermédiaire de bâti inférieur étant constituée d'une barre interne généralement verticale, ladite extrémité terminale à taille réduite desdites pattes de montage comportant une fente, qui y est formée, pour permettre de recevoir ladite barre interne verticale lorsque ladite extrémité terminale à taille réduite est insérée dans ladite traverse intermédiaire de bâti inférieur.

2. Pare-chocs selon la revendication 1, les éléments tubulaires (16, 17) étant réalisés par le biais d'un processus d'hydroformage avec des déclencheurs de détection d'impact (39) lesquels sont formés dans les éléments tubulaires (16, 17).

3. Automobile comportant un bâti structurel dans lequel un pare-chocs est soutenu par des traverses intermédiaires de bâti inférieur, **caractérisée en ce que** le pare-chocs comprend un pare-chocs (15) selon l'une quelconque des revendications 1 et 2.

4. Automobile selon la revendication 3, le pare-chocs (15) incluant une partie transversale (18) et des pattes de montage intégrées (19) s'étendant dans le plan longitudinal, chaque patte de montage (19) comportant une extrémité terminale (35) et le pare-chocs (15) est constitué d'éléments tubulaires (16, 17) supérieurs et inférieurs ayant une barre interne (14) généralement horizontale laquelle divise le pare-chocs en cellules supérieures et inférieures, et les traverses intermédiaires (20) de bâti inférieur sont formées en tant que paire d'éléments tubulaires (21, 22) de sorte que chaque extrémité terminale (35) est reçue à l'intérieur d'une traverse intermédiaire correspondante de bâti inférieur afin de monter le pare-chocs (15) sur les traverses intermédiaires (20) de bâti inférieur.

5. Automobile selon la revendication 4, les traverses intermédiaires de bâti inférieur étant constituées d'une barre interne (24) généralement verticale, chaque extrémité terminale (35) comportant au moins une fente (37), qui y est formée, pour permettre de recevoir la barre interne (24) généralement verticale des traverses intermédiaires (20) de bâti dans l'extrémité terminale (35).

6. Automobile selon la revendication 5, ladite au moins une fente (37) étant formée dans une paroi supérieure de l'élément tubulaire supérieur (16) du pare-chocs (15), dans une paroi inférieure de l'élément tubulaire inférieur (17) du pare-chocs (15), et dans la barre interne (14) généralement horizontale du pare-chocs (15) formée par une paroi supérieure de l'élément tubulaire inférieur (17) du pare-chocs (15) et par une paroi inférieure de l'élément tubulaire supérieur (16) du pare-chocs (15).
